# EUROPEAN PATENT SPECIFICATION

(11) **EP 2 939 115 B1**
(45) Date of publication and mention of the grant of the patent: **21.10.2020**
(21) Application number: 13869150.6
(22) Date of filing: 06.06.2013
(51) Int. Cl.: H04L 5/00, G06F 9/50, G06F 15/173, H04J 11/00, H04W 72/08

(54) **ENODEB AND METHOD FOR DOWNLINK AND UPLINK INTERFERENCE MITIGATION IN A MULTICELL NETWORK USING INTERFERENCE CANCELLATION AND ORTHOGONAL RESOURCE ALLOCATION**
ENODEB UND VERFAHREN ZUR DOWNLINK- UND UPLINK-INTERFERENZABSCHWÄCHUNG IN EINEM OFDMA-MEHRZELLEN-NETZWERK MIT INTERFERENZUNTERDRÜCKUNG UND ORTHOGONALER RESSOURCENZUWEISUNG
ENODEB ET MÉTHODE POUR L'ATTÉNUATION D'INTERFÉRENCES EN LIAISON DESCENDANTE ET EN LIAISON MONTANTE DANS UN RÉSEAU MULTICELLULAIRE UTILISANT L'ANNULATION D'INTERFÉRENCES ET L'ALLOCATION DE RESSOURCES PAR RÉPARTITION ORTHOGONALE

(30) Priority: 28.12.2012 US 201213729179
(43) Date of publication of application: 04.11.2015
(73) Proprietor: GUANGDONG OPPO MOBILE TELECOMMUNICATIONS CORP., LTD., Wusha, Chang'an Dongguan, Guangdong 523860 (CN)
(72) Inventor: RAO, Bhaskar, San Diego, California 92129 (US); LI, Qinghua, San Ramon, California 94582 (US)
(74) Representative: Manitz Finsterwald Patent- und Rechtsanwaltspartnerschaft mbB
(86) International application number: PCT/US2013/044452
(87) International publication number: WO 2014/105118

(56) References cited:
- US-A1- 2008 071 588
- US-A1- 2010 069 010
- US-A1- 2011 237 272
- US-A1- 2012 021 753
- US-A1- 2012 209 886
- US-A1- 2012 297 474
- US-B2- 8 090 685

## Description

This application claims the benefit of priority to U.S. Patent Application Serial No. 13/729,179, filed on December 28, 2012.

### BACKGROUND

In a multi-cell environment operating in Time Division Duplex (TDD) mode, Uplink (UL)-Downlink (DL) reconfiguration is use to meet the differing traffic of the cells. However, the different modes in neighboring cells, one in UL while the other in DL, results in significant interference problems limiting benefits that may be obtained from the UL-DL reconfiguration.

To elaborate, consider two cells where Cell 1 is in uplink while Cell 2 is in downlink. Cell 1 and Cell 2 may include a plurality of user equipment (UE), e.g., UE 1 in Cell 1 and UE 2 in Cell 2. Further, Cell 1 may include a first evolved Node-B, eNodeB 1 and Cell 2 may include second eNodeB 2. These different modes in the neighboring cells cause significant interference problems. There are different types of interference. One type of interference is caused on the uplink of UE 1 in Cell 1 from the transmissions from eNodeB 2. This can be a very strong interference because of the power levels of the transmission and the potentially line of sight channel. As a result, the UL Signal to Interference plus Noise Ratio (SINR) of UE 1 suffers. Another type of interference stems from transmissions from UE 1. The transmissions of UE 1 interferes with the receiver UE 2 impacting the DL SINR of UE 2 because of frequency reuse.

Past solutions to inter-cell interference in TDD mode simply tried to address the interference by forcing cells to switch in a synchronous manner or by allowing for limited switching flexibility and dealing with the interference using processing at the receiver, such as a minimum mean squared criteria based receiver.

In a multi-cell environment operating in Frequency Division Duplex (FDD) mode, *α* frequency reuse of one is used for higher spatial reuse and utilization of the available spectrum. In a legacy FDD system, the cells operate downlinks on one frequency and uplinks on the other. However, the DL transmissions of the cells interfere with one another and so do the UL transmissions. Thus, inter-cell interference occurs in the downlinks and uplinks. Previous attempts to mitigate this inter-cell interference include a combination of techniques such as soft frequency reuse and power control. However, the traffic load may change semi-statically and/or may be uneven among neighboring cells. Thus, efforts to manage interference may increase in complexity.

US 2010/0069010 A1 is directed to methods of reducing inter-cell interference in wireless networks using successive interference cancellation (SIC). Example implementations in US 2010/0069010 A1 use inter-cell cooperation between cells and/or sectors to successfully decode their associated users' uplink data signals and pass on the decoded uplink data signals to other cells/sectors in order to reduce inter-cell interference and allow for improved decoding of users' uplink data signals. The decoded uplink data signals may be passed via the backhaul.

US 2011/0237272 A1 provides for a multipoint equalization (MPE) framework for coordinated multipoint (CoMP) transmission in wireless communication is described herein. The disclosed MPE framework involves distributed scheduling decisions for CoMP transmission, reducing complexity of scheduling coordination as compared with centralized scheduling techniques that coordinate scheduling decisions for multiple network base stations. Further, the MPE framework involves distributed computation of CoMP transmission coefficients, relying on a maximum of two backhaul hops to obtain information for the computation, and disseminate the transmission coefficients. The disclosed MPE framework shows substantial gains in various network deployments over conventional CoMP technique.

US 2012/0021753 A1 facilitates inter-cell interference coordination using resource partitioning. A UE may receive or determine information related to received interference and/or future scheduling. The information may be communicated to a serving base station, which may use the information to allocate uplink or downlink resources between cells. The uplink and/or downlink resource may be partitioned in subbands to mitigate interference from adjacent network nodes. The eNBs may communicate, such as directly, via a backhaul connection, and/or between UEs to configure interference coordination and signaling.

### Summary

The invention is defined by the subject matter of the independent claims. Advantageous embodiments are subject to the dependent claims and are discussed herein below.

All the described embodiments in the following text which do not fall within the scope of the claims should be regarded as examples for understanding the present invention.

### Brief Description of the Drawings

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
Fig. 1 illustrates a cellular network wherein interference occurs when different modes are being implemented in neighboring cells;
Fig. 2 shows a network wherein a reference signal is shared between eNodeBs using a backhaul channel;
Fig. 3 shows cross interference in a multi-cell environment operating in FDD mode according to an embodiment;
Fig. 4 shows interference mitigation according to an embodiment;
Fig. 5 illustrates an exemplary implementation of an eNodeB that may correspond to an eNodeBs according to an embodiment;
Fig. 6 illustrates exemplary components of user equipment (UE) according to an embodiment;
Fig. 7 illustrates an exemplary implementation of UE as a mobile communication device according to an embodiment;
Fig. 8 is a flow chart of a method for mitigating interference in a communications network according to an embodiment; and
Fig. 9 illustrates a block diagram of an example machine upon which any one or more of the techniques (e.g., methodologies) discussed herein may perform.

### Description of Embodiments

Interference mitigation in a multicell network is provided using interference cancellation and orthogonal resource allocation. A backhaul channel is used to share reference signals that may be used to cancel interference from neighboring cell downlink signals. Also, resource blocks assigned to a first user equipment in a first cell are orthogonal to the resource allocated to user equipment assigned to a second user equipment in a second cell that is in close proximity to the first user equipment.

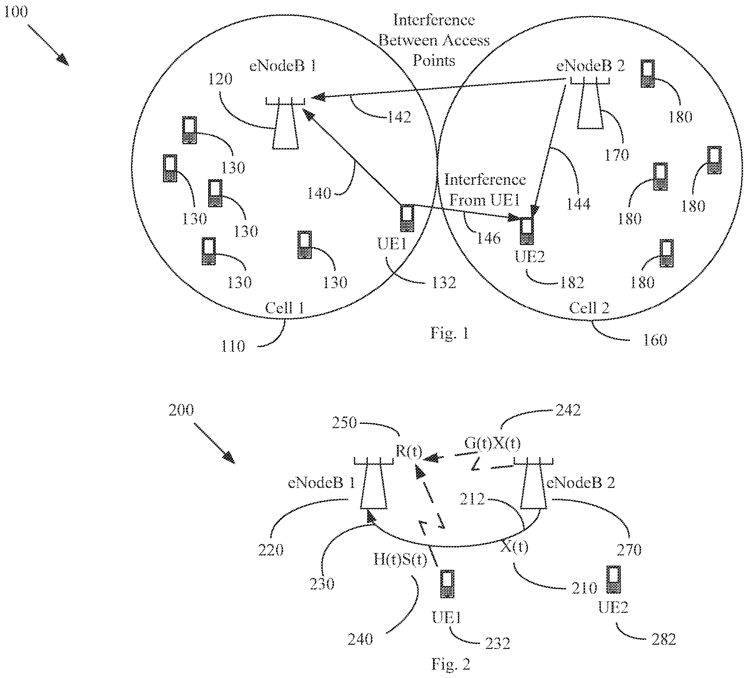

Fig. 1 illustrates a cellular network 100 wherein interference occurs when different modes are being implemented in neighboring cells. In Fig. 1, Cell 1 110 includes a first evolved Node B (eNodeB 1) 120 for providing mobile communication devices 130 in Cell 1 110 access to a network (not shown). As shown in Fig. 1, Cell 1 110 may include many mobile communication devices 130. One such mobile device is user equipment one (UE1) 132. UE1 132 has a link with eNodeB 1 120 to communicate with a network through eNodeB 1 120. Similarly, Cell 2 160 includes a second Evolved Node B (eNodeB 2) 170 for providing mobile communication devices 180 in Cell 2 160 access to a network (not shown). The network accessed by eNodeB 2 170 may be the same network accessed by eNodeB 1 120. Cell 2 160 may also include many mobile communication devices 180. One such mobile device 180 is user equipment two (UE2) 182. UE2 182 has a link with eNodeB 2 170 to communicate with a network through eNodeB 2 170.

As can be seen in Fig. 1, UF1 132 in Cell 1 110 is an uplink mode 140 while UE2 182 in Cell 2 is in a downlink mode 144. The different modes in the neighboring cells 110, 160 cause significant interference problems. Two causes of inter-cell interference will be addressed. One type of inter-cell interference is caused on the uplink 140 of UE1 132 in Cell 1 110 from the transmissions 142 of eNodeB 2 170 propagating to eNodeB 1 120. The inter-cell interference caused at eNodeB 1 120 in Cell 1 110 by transmissions 142 of eNodeB 2 170 may be a very strong interference because the power levels of the transmission by eNodeB 2 170 are high and potentially because of the line of sight channel. As a result, the Signal to Interference plus Noise Ratio (SINR) of the uplink 140 from UE1 132 suffers. The second type of inter-cell interference 146 results from the transmission from UE1 132 to UE2 182. Because of frequency reuse, the transmissions of UE1 132 interfere with the receiver UE2 182, which impacts the SINR of the downlink 144 to UE2 182.

A DL-UL interference management technique according to an embodiment uses two concepts to avoid the negative impact of the DL-UL interference on the UL SINR of UE1 132 and the DL SINR of UE2 182. The first technique applies interference cancellation. The second technique involves orthogonal resource allocation. The two receivers affected by the uncoordinated UL/DL switching are eNodeB 1 120 of Cell 1 110 and UE2 182 of Cell 2 160.

Interference at eNodeB 1 120 results from signals from eNodeB 2 170 that are received at eNodeB 1 120. However, the interference at eNodeB 1 120 can be cancelled by using a backhaul channel and providing a reference signal provided to eliminate this interference.

Fig. 2 shows a network 200 wherein a reference signal is shared between eNodeBs using a backhaul channel according to an embodiment. In Fig. 2, eNodeB 2 transmits signals X(t) 210 to eNodeB 1 220 over the backhaul channel 230. As described above, the transmitted signals X(t) 210 may cause interference at eNodeB 1 220. After receiving the transmitted signals X(t) 210 at eNodeB 1 220, eNodeB 1 220 reconstructs the interference by combining the received signals X(t) 210 and the estimated channel contribution G(t) from eNodeB 2 270 to eNodeB 1 220 to form G(t)X(t) 242.

The UL signal, R(t) 250, transmitted from UE1 232 includes the UL signal intended for eNodeB 1 220, the interference signal G(t)X(t) 242, and channel noise, N(t) (not shown). The reconstructed interference signal G(t)X(t) 242 is then subtracted from the signal, R(t) 250, received at eNodeB 1 220, i.e. H(t)S(t) 240 = R(t) 250 - G(t)X(t) 242. After the strong DL interference G(t)X(t) 242 is removed, eNodeB 1 220 can then detect the desired signal, i.e., the weak UL signal of UE1 232, H(t)S(t) 240. Since the wireless channel G(t) between base stations eNodeB 1 220 and eNodeB 2 270 is static and the received signals from the backhaul channel 212 can be used as channel training signals, the channel response G(t) can be estimated at least 6 times more accurately than the UL channel 240 of UE1 232. This therefore reduces the residual interference after cancellation has been implemented.

As suggested above, interference at UE2 282 results from the transmissions from UE1 232. However, the interference at UE2 282 can be minimized or avoided by making sure the resource blocks assigned to UE2 282 on the downlink are orthogonal to the resource allocated to the close proximity UE1 232. Accordingly, through coordination of switching between downlink mode and uplink mode, a downlink of eNodeB 1 220, may at least partially overlaps with the uplink of another eNodeB, e.g., eNodeB 2 270. A reduction in interference at UE2 may be achieved by location awareness of DE1 and UE2, and by coordination between eNodeB 1 220 and eNodeB 2 270.

The location information and coordination can be enabled by exchanges between eNodeB 1 220 and eNodeB 2 270 via the backhaul channel 210. The received signals from the backhaul channel 212 may be used as reference signals for channel training. More specifically, since data is known at the eNodeB 1 220 via the backhaul channel 212, the reference signal from the backhaul channel 212 may be treated as channel training signals for estimating the interfering channel. This enables interference reconstruction at eNodeB 220. Furthermore, the reference signals from the backhaul channel 212 may include data signals, e.g., control data or user traffic data. When eNodeB 2 270 is idle, the interference may only include control data.

Accordingly, at least one of interference cancellation and orthogonal resource allocation according to an embodiment may be used to mitigate problems from TDD switching. A cell can now adapts its mode to best deal with the uplink-downlink traffic conditions avoiding the loss in efficiency resulting from the synchronous switching. Thus, eNodeBs 220, 270 transmit a signal to a neighboring cell to enable interference cancellation.

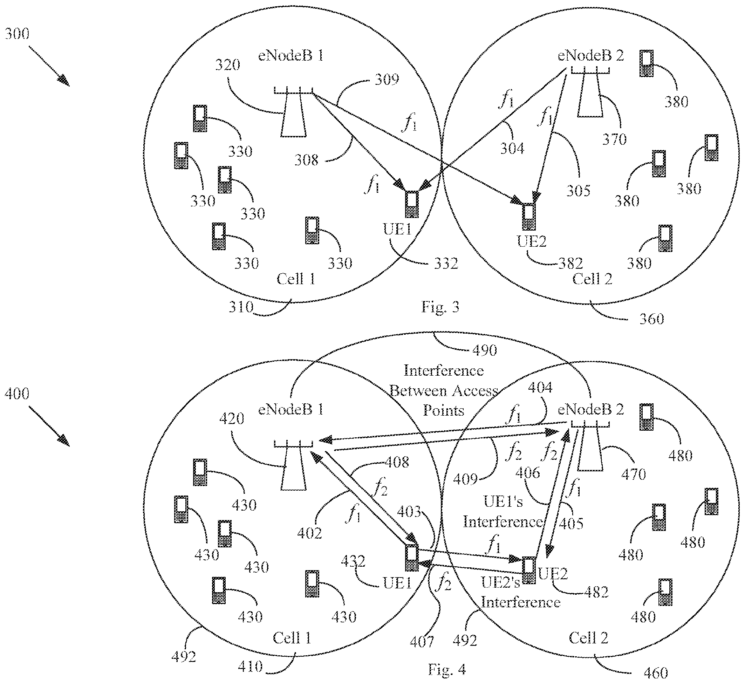

Fig. 3 shows cross interference in a multi-cell environment operating in FDD mode 300 according to an embodiment. Fig. 3 shows Cell 1 310 and Cell 2 360 having a plurality of user equipment (UE) 330 in Cell 1 310 and a plurality of user equipment (UE) 380 in Cell 2 360. In a multi-cell environment operating in FDD mode, a frequency reuse of one is often used and the DL transmission 309 of Cell 1 310 interferes with DL transmission 305 of Cell 2 360, and the DL transmission 304 of Cell 2 310 interferes with the DL transmission 308 of Cell 1 310. The same type of interference occurs with the UL transmissions (not shown). Because the cells operate downlinks on one frequency, *ƒ*₁, and uplinks on another frequency, e.g., *ƒ*₂, cell interference occurs in the downlinks and in the uplinks (only downlinks are shown in Fig. 3).

In the past, soft frequency reuse and power control have been used to mitigate such interference without the desired effect. However, by applying a technique using the backhaul channel infrastructure in Coordinated Multipoint Transmission Systems (CoMP) and Centralized-Radio Access Network (C-RAN), a large part of the downlink interference may be mitigated and the uplink interference may be managed according to an embodiment. More specifically, as shown in Fig. 4 below, to avoid the negative impact of the inter-cell interference, the uplink and downlink frequencies may be interchanged. However, as shown in Fig. 3, UE1 332 and UE2 382 receive interference from a neighboring eNodeBs, i.e., UE2 482 receives interference from signals transmitted by eNodeB 1 320 and UE1 332 receives interference from signals transmitted by eNodeB 2 370.

Fig. 4 shows interference mitigation 400 according to an embodiment. Fig. 4 also shows Cell 1 410 and Cell 2 460 having a plurality of user equipment (UE) 430 in Cell 1 410 and a plurality of user equipment (UE) 480 in Cell 2 460. In Fig. 4, the frequencies, *ƒ*₁, of the uplink signals 402, 403 of a first cell, Cell 1 410, and the frequencies, *ƒ*₁, of the downlink signals 404, 405 of a second cell, Cell 2 460 are equal. Likewise, the frequencies, *ƒ*₂, of the uplink signals 406, 407 of a second cell, Cell 2 460, and the frequencies, *ƒ*₂, of the downlink signals 408, 409 of a first cell, Cell 1 410 are equal. As shown in Fig. 4, Cell 1410 uses a first frequency band, *ƒ*₁, to run uplink transmissions 402, e.g., UE 1 432 sends signals to the eNodeB 1 420 of Cell 1 410. However, the uplink signal 403 may be received by UE2 482 in Cell 2 460 and, absence mitigation, will interfere with the downlink transmissions 405 from eNodeB 2 470 of Cell 2 460. In addition, the downlink transmission 404 from eNodeB 2 470 will cause interference at the eNodeB 1 420 of Cell 1 410 thereby degrading the uplink transmissions of UE1 432.

To mitigate this interference, interference cancellation and orthogonal resource allocation are implemented according to an embodiment. The interference at eNodeB1 can be cancelled by using the backhaul channel 490 and providing a reference signal to eliminate this interference. Namely, the downlink interference from eNodeB 2 470 is known at eNodeB 1 420 via the backhaul channel 490 and can be canceled in the received uplink signal 402.

The interference at UE2 482 of Cell 2 460 can be minimized or avoided by making sure the resource blocks assigned to UE2 432 on the downlink 405 are orthogonal to the resource allocated for the uplink 403 received at UE2 482 from the close proximity UE1 432 of Cell 1. This can be achieved by rough location awareness and coordination between Cell 1 410 and Cell 2 460. More specifically, eNodeB 1 420 and eNodeB 2 470 can conduct joint scheduling across their uplink 402, 406 and downlink 408, 405.

Joint scheduling has heretofore been applied to either the downlink or the uplink, but not both concurrently. Accordingly, any joint scheduling was not effective because there is a lack of downlink power control. However, the mitigation according to an embodiment illustrated with respect to Fig. 4 is effective. For example, the interference from downlink 404 can be removed via backhaul channel 490 exchange independent of the transmission power. Second, the uplink interference 403, 406 is between two UEs, UE1 432 and UE2 482, which have low antenna placements. Path loss, which describes the attenuation of signal strength with distance, is a fourth order exponential decaying power based on distance. Thus, the interference degrades quickly with distance.

For example, in Fig. 4, eNodeB 1 420 may schedule UE1 432 to be far away from UE2 482 for the uplink. This essentially removes the interference from UE1 432 to UE2 482. In addition, the scheduling may not be provided if the downlink signal 405 from eNodeB 2 470 to UE2 482 is more than 6 dB stronger than the interference signal 403 from UE1 432 to UE2 482. This is due to the high transmission power and antenna gain at eNodeB 2 470. The joint scheduling may be provided when the UEs, e.g. UE1 432 and UE2 482, are at the cell edges 492 and are very close to one another. Therefore, rough location information is provided to identify two very close UEs, e.g. UE1 432 and UE2 482, belonging to two different cells, Cell 1 410 and Cell 2 460, respectively.

Using Channel Quality Indicator (CQI) feedback and interference reports, eNodeBs, e.g., eNodeB 1 420 and eNodeB 2 470, may be able to jointly identify neighboring user equipment (UE) sufficiently separated by a safe distance where interference does not affect communication. For example, the distance ratio between UE1 432 and UE2 482, or between any two UEs, can be roughly estimated by eNodeB 1 420 and eNodeB 2 470 from the report/feedback. Using the ratio, eNodeB 1 420 and eNodeB 2 470 can avoid scheduling uplink from UE1 432 and UE2 482 when the distance ratio is equal to one. For another example, eNodeB 1 420 and eNodeB 2 470 may derive location information using other methods including estimating the location of UE1 432 and UE2 482 using rough triangulation with received signal strengths and/or via separate systems, external or distinct from the communications network such as GPS. Those skilled in the art will recognize that frequency resuse does not need to be sacrificed. Rather, frequency reuse can still be used. The same applies to any other interference mitigation technique. Thus, interference management can be greatly simplified.

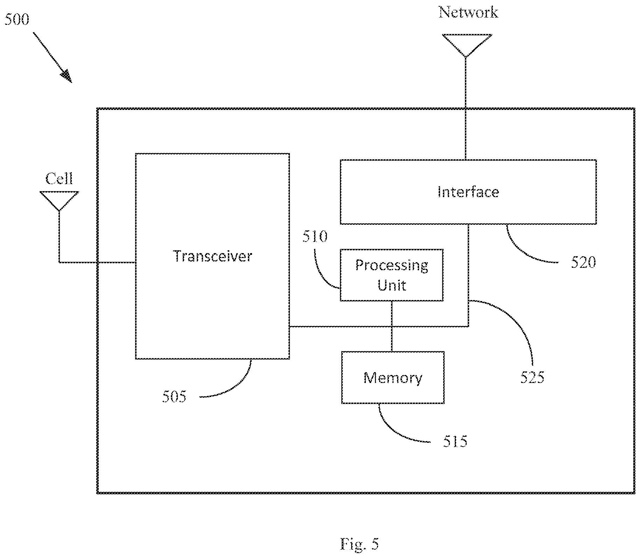

Fig. 5 illustrates an exemplary implementation of an eNodeB 500 according to an embodiment. The eNodeB may include a transceiver 505, a processing unit 510, a memory 515, an interface 520 and a bus 525. Transceiver 505 may include transceiver circuitry for transmitting and/or receiving symbol sequences using radio frequency signals via one or more antennas. Processing unit 510 may include a processor, microprocessor, or processing logic that may interpret and execute instructions. Processing unit 510 may perform the device data processing functions and other eNodeB functions. For example, by way of transceiver 505 eNodeB 500 may receive, via a backhaul channel, interference information from a neighboring eNodeB. Processing unit 510 may then use interference cancellation and/or orthogonal resource allocation to eliminate interference using the interference information received from the backhaul channel.

Memory 515 may provide permanent, semi-permanent, or temporary working storage of data and instructions for use by processing unit 510 in performing device processing functions. Memory 515 may include read only memory (ROM), random access memory (RAM), large-capacity storage devices, such as a magnetic and/or optical recording medium and its corresponding drive, and/or other types of memory devices. Interface 520 may include circuitry for interfacing with a link that connects to a network. Bus 525 may interconnect the various components of eNodeB 500 to permit the components to communicate with one another.

The configuration of components of device 500 illustrated in Fig. 5 is for illustrative purposes. Other configurations with more, fewer, or a different arrangement of components may be implemented.

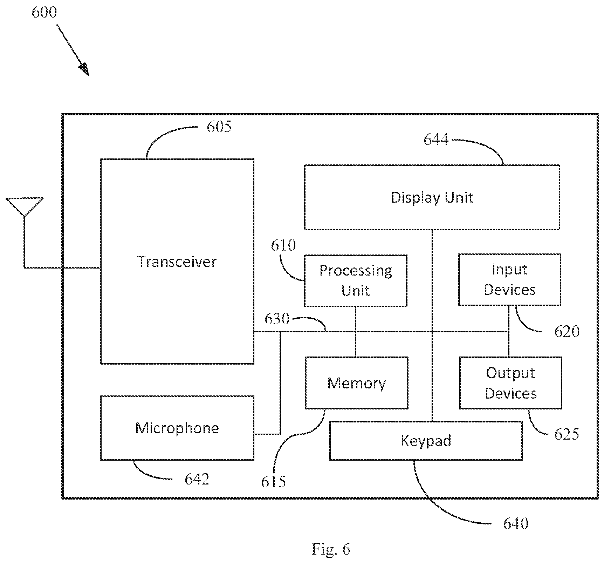

Fig. 6 illustrates exemplary components of user equipment (UE) 600 according to an embodiment. UE 600 may include a transceiver 605, a processing unit 610, memory 615, an input device(s) 620, an output device(s) 625, and a bus 630. Transceiver 605 may include transceiver circuitry for transmitting and/or receiving symbol sequences using radio frequency signals via one or more antennas. Processing unit 610 may include a processor, microprocessor, or processing logic that may interpret and execute instructions. Processing unit 610 may perform the data processing functions for inputting, outputting, and processing of data including data buffering and device control functions, such as call processing control, user interface control, or the like.

Memory 615 may provide permanent, semi-permanent, or temporary working storage of data and instructions for use by processing unit 610 in performing device processing functions. Memory 615 may include ROM. RAM, large-capacity storage devices, such as a magnetic and/or optical recording medium and its corresponding drive, and/or other types of memory devices. Input device(s) 620 may include mechanisms for entry of data into UE 600. For example, input device(s) 620 may include a keypad 640, a microphone 642 or a display unit 644. The keypad 640 may permit manual user entry of data into UE 600. The microphone 642 may include mechanisms for converting auditory input into electrical signals. The display unit 644 may include a screen display that may provide a user interface (e.g. a graphical user interface) that can be used by a user for selecting device functions. The display unit 644 may include any type, of visual display, such as, for example, a liquid crystal display (LCD), a plasma screen display, a light-emitting diode (LED) display, a cathode ray tube (CRT) display, an organic light-emitting diode (OLED) display, etc.

Output device(s) 625 may include mechanisms for outputting data in audio, video and/or hard copy format. For example, output device(s) 625 may include a speaker (not shown) that includes mechanisms for converting electrical signals into auditory output. Output device(s) 625 may further include a display unit that displays output data to the user. For example, the display unit may provide a graphical user interface that displays output data to the user. Bus 630 may interconnect the various components of UE 600 to permit the components to communicate with one another.

The configuration of components of UE 600 illustrated in Fig. 6 is for illustrative purposes. Other configurations with more, fewer, or a different arrangement of components may be implemented.

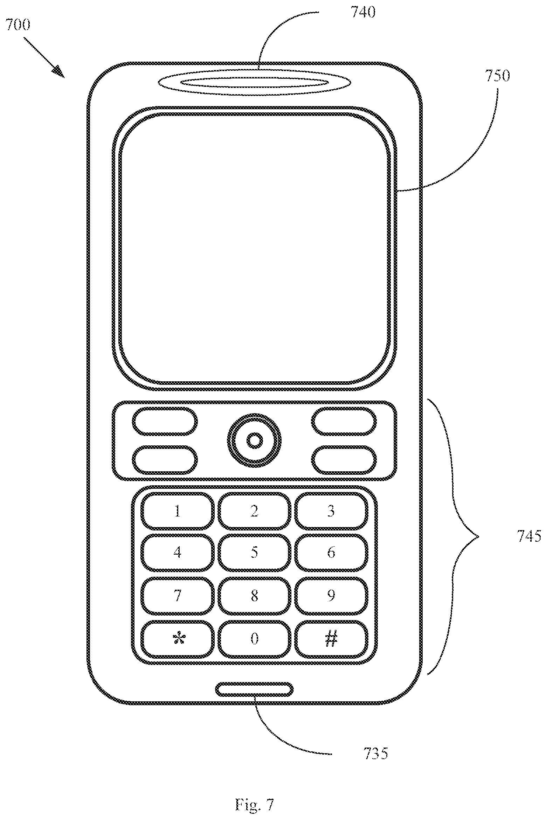

Fig. 7 illustrates an exemplary implementation of UE as a mobile communication device 700 according to an embodiment. As shown in Fig. 7, the mobile communication device 700 may include a microphone 735 for entering audio information into the mobile communication device 700, a speaker 740 for providing an audio output from mobile communication device 700, a keypad 745 for manual entry of data or selection of functions of the mobile communication device 700, and a display 750 that may visually display data to the user and/or which may provide a user interface that the user may use to enter data or to select device functions in conjunction with keypad 745.

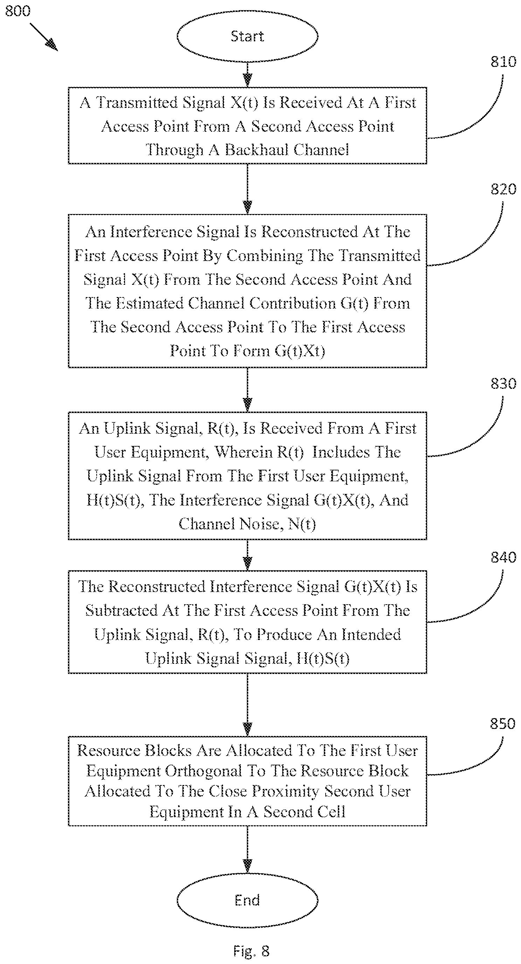

Fig. 8 is a flow chart 800 of a method for mitigating interference in a communications network according to an embodiment. A transmitted signal X(t) is received at a first eNodeB from a second eNodeB through a backhaul channel 810. An interference signal is reconstructed at the first eNodeB by combining the transmitted signal X(t) from the second eNodeB and the estimated channel contribution G(t) from the second eNodeB to the first eNodeB to form G(t)X(t) 820. An uplink signal, R(t), is received from a first user equipment, wherein R(t) includes the uplink signal from the first user equipment, H(t)S(t), the interference signal G(t)X(t), and channel noise, N(t) 830. The reconstructed interference signal G(t)X(t) is subtracted at the first eNodeB from the uplink signal, R(t), to produce an intended uplink signal signal, H(t)S(t) 840. Resource blocks are allocated to the first user equipment orthogonal to the resource block allocated to the close proximity second user equipment in a second cell 850.

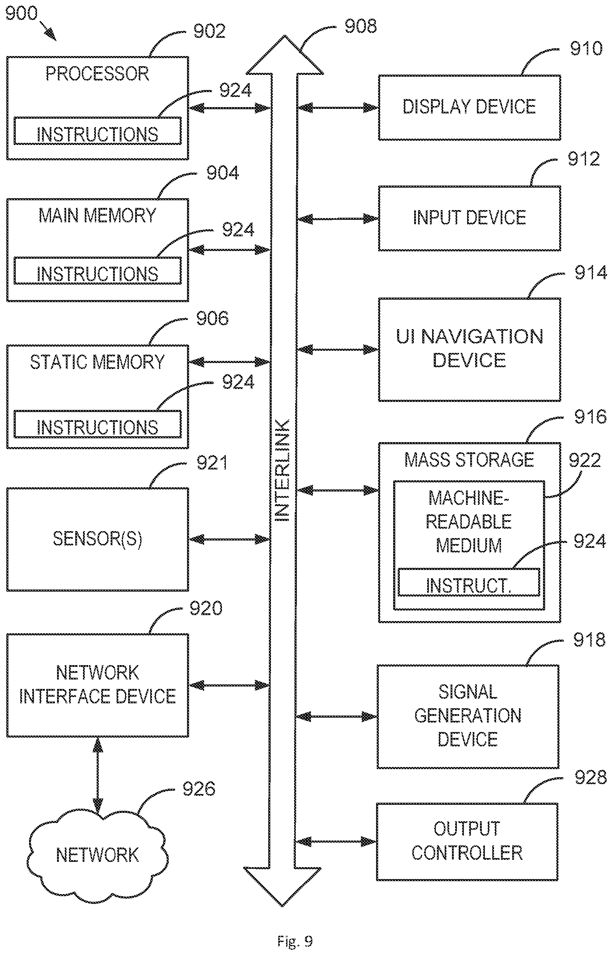

Fig. 9 illustrates a block diagram of an example machine 900 upon which any one or more of the techniques (e.g., methodologies) discussed herein may perform. The machine 900 may operate in a standalone mode or may be connected (e.g., networked) to other machines in a network mode. In a networked deployment, the machine 900 may operate in the capacity of a server machine, a client machine, or in server-client network environments. In an example, the machine 900 may act as a peer machine in peer-to-peer (P2P) (or other distributed) network environment. In another example, the machine 900 may acts as a client (STA) or an AP during a link setup when domain crossing occurs.

The machine 900 may be an eNodeB, such as an eNodeB, or user equipment, such as a mobile phone. The machine may also be a personal computer (PC), a tablet PC, a set-top box (STB), a Personal Digital Assistant (PDA), a mobile telephone, a web appliance, a network router, switch or bridge, or any machine capable of executing instructions (sequential or otherwise) that specify actions to be taken by that machine.

Further, while a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations. Examples, as described herein, may include, or may operate on, logic or a number of components, modules, or mechanisms. Modules are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a machine readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

Machine (e.g., computer system) 900 may include a hardware processor 902 (e.g., a central processing unit (CPU), a graphics processing unit (GPU), a hardware processor core, or any combination thereof), a main memory 904 and a static memory 906, some or all of which may communicate with one another via an interlink (e.g., bus) 908. The machine 900 may further include a display unit 910, an alphanumeric input device 912 (e.g., a keyboard), and a user interface (UI) navigation device 914 (e.g., a mouse). In an example, the display unit 910, input device 912 and UI navigation device 914 may be a touch screen display. The machine 900 may additionally include a storage device (e.g., drive unit) 916, a signal generation device 918 (e.g., a speaker), a network interface device 920, and one or more sensors 92 1, such as a global positioning system (GPS) sensor, compass, accelerometer, or other sensor. The machine 900 may include an output controller 928, such as a serial (e.g., universal serial bus (USB), parallel, or other wired or wireless (e.g., infrared (IR)) connection to communicate or control one or more peripheral devices (e.g., a printer, card reader, etc.).

The storage device 916 may include a machine readable medium 922 on which is stored one or more sets of data structures or instructions 924 (e.g., software) embodying or utilized by any one or more of the techniques or functions described herein. The instructions 924 may also reside, completely or at least partially, within the main memory 904, within static memory 906, or within the hardware processor 902 during execution thereof by the machine 900. In an example, one or any combination of the hardware processor 902, the main memory 904, the static memory 906, or the storage device 916 may constitute machine readable media.

While the machine readable medium 922 is illustrated as a single medium, the term "machine readable medium" may include a single medium or multiple media (e.g., a centralized or distributed database, and/or associated caches and servers) that configured to store the one or more instructions 924.

The term "machine readable medium" may include any medium that is capable of storing, encoding, or carrying instructions for execution by the machine 900 and that cause the machine 900 to perform any one or more of the techniques of the present disclosure, or that is capable of storing, encoding or carrying data structures used by or associated with such instructions. Nonlimiting machine readable medium examples may include solid-state memories, and optical and magnetic media. In an example, a massed machine readable medium comprises a machine readable medium with a plurality of particles having resting mass. Specific examples of massed machine readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; and CD-ROM and DVD-ROM disks.

The instructions 924 may further be configured for transmission and reception over a communications network 926 using a transmission medium via the network interface device 920 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks ((e.g., channel access methods including Code Division Multiple Access (CDMA), Time-division multiple access (TDMA), Frequency-division multiple access (FDMA), and Orthogonal Frequency Division Multiple Access (OFDMA) and cellular networks such as Global System for Mobile Communications (GSM), Universal Mobile Telecommunications System (UMTS), CDMA 2000 1x* standards and Long Term Evolution (LTE)), Plain Old Telephone (POTS) networks, and wireless data networks (e.g., Institute of Electrical and Electronics Engineers (IEEE) 802 family of standards including IEEE 802.11 standards (Wi-Fi®), IEEE 802.16 standards (WiMax®) and others), peer-to-peer (P2P) networks, or other protocols now known or later developed.

For example, the network interface device 920 may include one or more physical jacks (e.g., Ethernet, coaxial, or phone jacks) or one or more antennas to connect to the communications network 926. Network interface device 920 may provide an air interface for providing a radio-based communication link between a communications network 926 and user equipment in a cell serviced by the eNodeB. The network interface device 920 may include a transceiver arranged to transmit and receive packets via the air interface.

According to one embodiment, the network interface device 920 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding or carrying instructions for execution by the machine 900, and includes digital or analog communications signals or other intangible medium to facilitate communication of such software.

The above detailed description includes references to the accompanying drawings, which form a part of the detailed description. The drawings show, by way of illustration, specific embodiments that may be practiced. These embodiments are also referred to herein as "examples." Such examples can include elements in addition to those shown or described.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels.

The above description is intended to be illustrative, and not restrictive. For example, the above-described examples (or one or more aspects thereof) may be used in combination.

## Claims

1. An evolved Node B, eNodeB (220, 500), for mitigating interference caused by a downlink signal transmitted by a neighboring eNodeB (270, 500), the eNodeB (220, 500) comprising:
a transceiver (505) arranged to receive through a backhaul channel (212, 230) a reference signal (210) from the neighboring eNodeB (270, 500), and to receive, via an air interface, an uplink signal (250) from a user equipment, UE (132, 232),
wherein the reference signal is the downlink signal transmitted from said neighboring eNodeB (270, 500), and the uplink signal (250) includes an uplink signal component from the UE (132, 232), a composite interference signal (242) resulting from the downlink signal transmitted from said neighboring eNodeB (270, 500), and channel noise;
a processing unit (510) arranged to:
obtain an estimate of a channel response of a static wireless channel from the neighboring eNodeB (270, 500) to the eNodeB (220, 500) using the reference signal (210);
combine the reference signal (210) from the neighboring eNodeB (270, 500) and the estimate of the channel response to form the composite interference signal (242); and
subtract the composite interference signal (242) from the uplink signal (250) to detect the UE's (132, 232) uplink signal component in the received uplink signal (250).

2. The eNodeB (220, 500) of claim 1, wherein the processing unit (510) is arranged to use location awareness of a neighboring UE (182, 282) and the UE (132, 232) to provide a resource allocation to the UE (132, 232) that is orthogonal to a resource allocation provided to a neighboring UE (182, 282) by the neighboring eNodeB (270, 500).

3. The eNodeB (220, 500) of claim 1, wherein the processing unit (510) is arranged to coordinate location information associated with the UE (132, 232) at an edge of the cell (110) and a neighboring UE (182, 282) at an edge of a neighboring cell (160).

4. The eNodeB (220, 500) of claim 1, wherein the processing unit (510) is arranged to conduct joint scheduling across uplinks and downlinks with the neighboring eNodeB (270, 500) to provide resource allocations to the UE (132, 232) orthogonal to the resource allocations of a neighboring UE (182, 282).

5. The eNodeB (220, 500) of claim 1, wherein the processing unit (510) is arranged to use Channel Quality Indicator, CQI, feedback and an interference report to identify a neighboring UE (182, 282) separated from the UE (132, 232) by a safe distance where interference does not affect communication.

6. The eNodeB (220, 500) of claim 1, wherein the reference signal (210) is used as a channel training signal.

7. The eNodeB (220, 500) of claim 1, wherein the processor (510) is arranged to coordinate switching between downlink mode and uplink mode with a neighboring eNodeB (270, 500) using the backhaul channel (212, 230) such that a downlink mode of the UE (132, 232) at least partially overlaps with an uplink mode of a neighboring UE (182, 282).

8. A method for mitigating interference caused by a downlink signal transmitted from a neighboring evolved NodeB, eNodeB (270, 500), the method comprising:
receiving, at an eNodeB (220, 500) and from the neighboring eNodeB (270, 500), a reference signal (210) through a backhaul channel (212, 230), wherein the reference signal is the downlink signal transmitted from neighboring eNodeB (270, 500);
obtaining an estimate of a channel response of a static wireless channel from the neighboring eNodeB (270, 500) to the eNodeB (220, 500) using the reference signal (210);
combining, at the eNodeB (220, 500), the reference signal (210) from the neighboring eNodeB (270, 500) and the estimate of the channel response to form a composite interference signal (242);
receiving, via an air interface, an uplink signal (250) from a user equipment, UE (132, 232), wherein the uplink signal (250) includes an uplink signal component from the UE (132, 232), the composite interference signal (242), and channel noise;
subtracting, at the eNodeB (220, 500), the composite interference signal (242) from the uplink signal (250) to detect the UE's (132, 232) uplink signal component in the received uplink signal (250).

9. The method of claim 8, further comprising:
assigning resource blocks to the UE (132, 232) orthogonal to resource blocks allocated to another UE in a second cell (160) supported by the neighboring eNodeB (220, 500), the other UE being in close proximity to the UE (132, 232).

10. The method of claim 9further comprising providing resource allocation to the UE (132, 232) that is orthogonal to the resource allocation provided to the other UE (182, 282) by the neighboring eNodeB (220, 500).

11. A computer readable medium (922) storing instructions (924) that, when executed by a processing unit (515) of an eNodeB (220, 500), cause the eNodeB (220, 500) to perform the method of one of claims 8 to 10.

## Patentansprüche

1. Evolved Node B bzw. eNodeB (220, 500) zum Mindern von Störungen, die durch ein Downlink-Signal verursacht werden, das durch einen benachbarten eNodeB (270, 500) gesendet wird, wobei der eNodeB (220, 500) Folgendes umfasst:
einen Sendeempfänger (505) ausgelegt zum Empfangen eines Referenzsignals (210) von dem benachbarten eNodeB (270, 500) mittels eines Backhaul-Kanals (212, 230) und zum Empfangen eines Uplink-Signals (250) von einem Benutzergerät UE (132, 232) über eine Funkschnittstelle,
wobei das Referenzsignal das von dem benachbarten eNodeB (270, 500) gesendete Downlink-Signal ist und das Uplink-Signal (250) eine Uplink-Signalkomponente von dem UE (132, 232) umfasst, wobei ein zusammengesetztes Störsignal (242) aus dem von dem benachbarten eNodeB (270, 500) gesendeten Downlink-Signal und Kanalrauschen resultiert;
eine Verarbeitungseinheit (510), ausgelegt zum
Erhalten einer Schätzung einer Kanalantwort eines statischen drahtlosen Kanals von dem benachbarten eNodeB (270, 500) zu dem eNodeB (220, 500) unter Verwendung des Referenzsignals (210) ;
Kombinieren des Referenzsignals (210) von dem benachbarten eNodeB (270, 500) und der Schätzung der Kanalantwort zur Bildung des zusammengesetzten Störsignals (242); und
Subtrahieren des zusammengesetzten Störsignals (242) von dem Uplink-Signal (250), um die Uplink-Signalkomponente des UE (132, 232) in dem empfangenen Uplink-Signal (250) zu detektieren.

2. eNodeB (220, 500) nach Anspruch 1, wobei die Verarbeitungseinheit (510) ausgelegt ist zum Verwenden von Ortsbewusstheit eines benachbarten UE (182, 282) und des UE (132, 232), um eine Ressourcenvergabe an das UE (132, 232) bereitzustellen, die zu einer Ressourcenvergabe orthogonal ist, die einem benachbarten UE (182, 282) durch den benachbarten eNodeB (270, 500) bereitgestellt wird.

3. eNodeB (220, 500) nach Anspruch 1, wobei die Verarbeitungseinheit (510) ausgelegt ist zum Koordinieren von Ortsinformationen, die dem UE (132, 232) an einem Rand der Zelle (110) und einem benachbarten UE (182, 282) an einem Rand einer benachbarten Zelle (160) zugeordnet sind.

4. eNodeB (220, 500) nach Anspruch 1, wobei die Verarbeitungseinheit (510) ausgelegt ist zum Durchführen von gemeinsamem Scheduling über Uplinks und Downlinks mit dem benachbarten eNodeB (270, 500), um Ressourcenvergaben für das UE (132, 232) bereitzustellen, die zu den Ressourcenvergaben eines benachbarten UE (182, 282) orthogonal sind.

5. eNodeB (220, 500) nach Anspruch 1, wobei die Verarbeitungseinheit (510) ausgelegt ist zum Verwenden von Rückmeldung des Kanalqualitätsindikators CQI und einer Störungsmeldung, um ein benachbartes UE (182, 282) zu identifizieren, das durch eine sichere Distanz von dem UE (132, 232) getrennt ist, bei der Störungen Kommunikation nicht beeinträchtigen.

6. eNodeB (220, 500) nach Anspruch 1, wobei das Referenzsignal (210) als ein Kanaltrainingssignal verwendet wird.

7. eNodeB (220, 500) nach Anspruch 1, wobei der Prozessor (510) ausgelegt ist zum Koordinieren des Wechselns zwischen Downlink-Modus und Uplink-Modus mit einem benachbarten eNodeB (270,500) unter Verwendung des Backhaul-Kanals (212, 230), dergestalt, dass sich ein Downlink-Modus des UE (132, 232) mindestens teilweise mit einem Uplink-Modus eines benachbarten UE (182, 282) überlappt.

8. Verfahren zum Mindern von Störungen, die durch ein Downlink-Signal verursacht werden, das von einem benachbarten Evolved NodeB bzw. eNodeB (270, 500) gesendet wird, wobei das Verfahren Folgendes umfasst:
Empfangen eines Referenzsignals (210) in einem eNodeB (220, 500) und von dem benachbarten eNodeB (270, 500) mittels eines Backhaul-Kanals (212, 230), wobei das Referenzsignal das von dem benachbarten eNodeB (270, 500) gesendete Downlink-Signal ist;
Erhalten einer Schätzung einer Kanalantwort eines statischen drahtlosen Kanals von dem benachbarten eNodeB (270, 500) zu dem eNodeB (220, 500) unter Verwendung des Referenzsignals (210);
Kombinieren des Referenzsignals (210) von dem benachbarten eNodeB (270, 500) und der Schätzung der Kanalantwort in dem eNodeB (220, 500), um ein zusammengesetztes Störsignal (242) zu bilden;
Empfangen eines Uplink-Signals (250) von einem Benutzergerät UE (132, 232) über eine Funkschnittstelle, wobei das Uplink-Signal (250) eine Uplink-Signalkomponente von dem UE (132, 232), das zusammengesetzte Störsignal (242) und Kanalrauschen umfasst;
Subtrahieren des zusammengesetzten Störsignals (242) von dem Uplink-Signal (250) in dem eNodeB (220, 500), um die Uplink-Signalkomponente des UE (132, 232) in dem empfangenen Uplink-Signal (250) zu detektieren.

9. Verfahren nach Anspruch 8, ferner umfassend:
Zuweisen von Ressourcenblöcken an das UE (132, 232), die orthogonal zu Ressourcenblöcken sind, die an ein anderes UE in einer zweiten Zelle (160) vergeben werden, die durch den benachbarten eNodeB (220, 500) unterstützt wird, wobei sich das andere UE in dichter Nähe zu dem UE (132, 232) befindet.

10. Verfahren nach Anspruch 9, ferner umfassend: Bereitstellen von Ressourcenvergabe an das UE (132, 232), die orthogonal zu der Ressourcenvergabe ist, die durch den benachbarten eNodeB (220, 500) dem anderen UE (182, 282) bereitgestellt wird.

11. Computerlesbares Medium (922), das Anweisungen (924) speichert, die, wenn sie durch eine Verarbeitungseinheit (515) eines eNodeB (220, 500) ausgeführt werden, bewirken, dass der eNodeB (220, 500) das Verfahren nach einem der Ansprüche 8 bis 10 ausführt.

## Revendications

1. Nœud B évolué, eNodeB (220, 500), pour l'atténuation du brouillage causé par un signal de liaison descendante transmis par un nœud eNodeB voisin (270, 500), le nœud eNodeB (220, 500) comprenant :
un émetteur-récepteur (505) conçu pour recevoir, par l'intermédiaire d'un canal de raccordement (212, 230), un signal de référence (210) en provenance du nœud eNodeB voisin (270, 500), et pour recevoir, par l'intermédiaire d'une interface radio, un signal de liaison montante (250) en provenance d'un équipement utilisateur, UE (132, 232),
le signal de référence étant le signal de liaison descendante transmis par ledit nœud eNodeB voisin (270, 500), et le signal de liaison montante (250) incluant une composante de signal de liaison montante provenant de l'UE (132, 232), un signal brouilleur composite (242) résultant du signal de liaison descendante transmis par ledit nœud eNodeB voisin (270, 500), et un bruit de canal ;
une unité de traitement (510) conçue pour :
obtenir une estimation d'une réponse de canal d'un canal sans fil statique du nœud eNodeB voisin (270, 500) au nœud eNodeB (220, 500) en utilisant le signal de référence (210) ;
combiner le signal de référence (210) provenant du nœud eNodeB voisin (270, 500) et l'estimation de la réponse de canal pour former le signal brouilleur composite (242) ; et
soustraire le signal brouilleur composite (242) depuis le signal de liaison montante (250) pour détecter la composante de signal de liaison montante de l'UE (132, 232) dans le signal de liaison montante (250) reçu.

2. Nœud eNodeB (220, 500) selon la revendication 1, dans lequel l'unité de traitement (510) est conçue pour utiliser la connaissance de localisation d'un UE voisin (182, 282) et de l'UE (132, 232) pour fournir une allocation de ressources à l'UE (132, 232) qui est orthogonale à une allocation de ressources fournie à un EU voisin (182, 282) par le nœud eNodeB voisin (270, 500) .

3. Nœud eNodeB (220, 500) selon la revendication 1, dans lequel l'unité de traitement (510) est conçue pour coordonner les informations de localisation associées à l'UE (132, 232) à un bord de la cellule (110) et à un UE voisin (182, 282) à un bord d'une cellule voisine (160) .

4. Nœud eNodeB (220, 500) selon la revendication 1, dans lequel l'unité de traitement (510) est conçue pour conduire un ordonnancement conjoint sur les liaisons montantes et liaisons descendantes avec le nœud eNodeB voisin (270, 500) pour fournir à l'UE (132, 232) des allocations de ressources orthogonales aux allocations de ressources d'un UE voisin (182, 282).

5. Nœud eNodeB (220, 500) selon la revendication 1, dans lequel l'unité de traitement (510) est conçue pour utiliser un retour d'informations Indicateur de Qualité de Canal, CQI, et un rapport de brouillage pour identifier un UE voisin (182, 282) séparé de l'UE (132, 232) par une distance de sécurité à laquelle le brouillage n'affecte pas la communication.

6. Nœud eNodeB (220, 500) selon la revendication 1, dans lequel le signal de référence (210) est utilisé en tant que signal d'apprentissage de canal.

7. Nœud eNodeB (220, 500) selon la revendication 1, dans lequel le processeur (510) est conçu pour coordonner la commutation entre mode liaison descendante et mode liaison montante avec un nœud eNodeB voisin (270, 500) en utilisant le canal de raccordement (212, 230), de telle sorte qu'un mode liaison descendante de l'UE (132, 232) chevauche au moins partiellement un mode liaison montante d'un UE voisin (182, 282).

8. Procédé d'atténuation du brouillage causé par un signal de liaison descendante transmis par un nœud B évolué, eNodeB, voisin (270, 500), le procédé comprenant :
la réception d'un signal de référence (210), au niveau d'un nœud eNodeB (220, 500) et en provenance du nœud eNodeB voisin (270, 500), par l'intermédiaire d'un canal de raccordement (212, 230), le signal de référence étant le signal de liaison descendante transmis par un nœud eNodeB voisin (270, 500) ;
l'obtention d'une estimation d'une réponse de canal d'un canal sans fil statique du nœud eNodeB voisin (270, 500) au nœud eNodeB (220, 500) en utilisant le signal de référence (210) ;
la combinaison, au niveau du nœud eNodeB (220, 500), du signal de référence (210) provenant du nœud eNodeB voisin (270, 500) et de l'estimation de la réponse de canal pour former un signal brouilleur composite (242) ;
la réception, par l'intermédiaire d'une interface radio, d'un signal de liaison montante (250) en provenance d'un équipement utilisateur, UE (132, 232), le signal de liaison montante (250) incluant une composante de signal de liaison montante provenant de l'UE (132, 232), le signal brouilleur composite (242), et un bruit de canal ;
la soustraction, au niveau du nœud eNodeB (220, 500), du signal brouilleur composite (242) depuis le signal de liaison montante (250) pour détecter la composante de signal de liaison montante de l'UE (132, 232) dans le signal de liaison montante reçu (250).

9. Procédé selon la revendication 8, comprenant en outre :
l'attribution à l'UE (132, 232) de blocs de ressources orthogonaux à des blocs de ressource alloués à un autre UE dans une deuxième cellule (160) pris en charge par le nœud eNodeB voisin (220, 500), l'autre UE étant en étroite proximité de l'UE (132, 232).

10. Procédé selon la revendication 9, comprenant en outre la fourniture à l'UE (132, 232) d'une allocation de ressources qui est orthogonale à l'allocation de ressources fournie à l'autre UE (182, 282) par le nœud eNodeB voisin (220, 500).

11. Support lisible par ordinateur (922) stockant des instructions (924) qui, lorsqu'elles sont exécutées par une unité de traitement (515) d'un nœud eNodeB (220, 500), amènent le nœud eNodeB (220, 500) à exécuter le procédé selon l'une des revendications 8 à 10.
